# EUROPÄISCHE PATENTSCHRIFT

(11) **EP 2 318 890 B1**
(45) Veröffentlichungstag und Bekanntmachung des Hinweises auf die Patenterteilung: **30.11.2011**
(21) Anmeldenummer: 09777893.0
(22) Anmeldetag: 14.08.2009
(51) Int. Cl.: G05B 13/02

(54) **GESCHWINDIGKEITSREGELSYSTEM FÜR FAHRZEUGE**
SPEED CONTROL SYSTEM FOR VEHICLES
SYSTÈME DE RÉGULATION DE VITESSE POUR VÉHICULES

(30) Priorität: 23.08.2008 DE 102008039496; 10.12.2008 DE 102008061392
(43) Veröffentlichungstag der Anmeldung: 11.05.2011
(73) Patentinhaber: Bayerische Motoren Werke Aktiengesellschaft, 80809 München (DE)
(72) Erfinder: HARTMANN, Torsten, 80939 München (DE); HARTMANN, Jürgen, 94269 Rinchnach (DE)
(74) Vertreter: Wesel-Mair, Julia
(86) Internationale Anmeldenummer: PCT/EP2009/005918
(87) Internationale Veröffentlichungsnummer: WO 2010/022865

(56) Entgegenhaltungen:
- EP-A2- 1 334 863
- US-B1- 6 470 256

## Beschreibung

Die Erfindung bezieht sich auf ein Geschwindigkeitsregelsystem für Fahrzeuge aller Arten (z. B. Kraftfahrzeuge oder Schienenfahrzeuge oder Lastkraftwagen oder Militärfahrzeuge oder Kettenfahrzeuge oder Zweiräder mit Verbrennungsmotoren oder Hybridantrieben oder Elektroantrieben oder Solarantrieben etc.) zur verbrauchsorientierten Regelung der Fahrzeuggeschwindigkeit innerhalb eines vorgegebenen Sollgeschwindigkeitsbereichs.

Fahrzeuge mit Geschwindigkeitsregelsystemen sind seit langem bekannt. Die meisten derzeit erhältlichen Geschwindigkeitsregelsysteme regeln die Geschwindigkeit des Fahrzeugs durch eine vorgegebene Sollgeschwindigkeit. Diese Systeme sind vor allem bei Fahrten auf Verkehrswegen mit geringer Verkehrsdichte geeignet, da hier ein Fahren mit konstanter Geschwindigkeit oft gewünscht ist.

Neben diesen Geschwindigkeitsreglern können heute bereits bei einigen Herstellern auch um eine Abstandsregelung erweiterte Geschwindigkeitsregelungssysteme erworben werden. Vom Prinzip her ist dabei die allgemein bekannte Geschwindigkeitsregelung, die eine bestimmte vorgegebene Sollgeschwindigkeit einhält, um eine zusätzliche Abstandsfunktion erweitert, so dass der Einsatz einer solchen "abstandsbezogenen" Geschwindigkeitsreglung auch im dichten Autobahn- und Landstrassenverkehr möglich wird. Diese sog. "abstandsbezogene Geschwindigkeitsregelung" hält die vorgegebene Wunschgeschwindigkeit, wenn die eigene Fahrspur frei ist. Erkennt eine am Kraftfahrzeug angebrachte Abstandsensorik, die insbesondere auf Radarbasis arbeiten kann, ein vorausfahrendes Zielobjekt bzw. (Kraft-) Fahrzeug in der eigenen Spur, so wird die eigene Geschwindigkeit, bspw. durch Veranlassen eines geeigneten Bremsmoments, an die Geschwindigkeit des vorausfahrenden Kraftfahrzeugs angepasst. Teilweise können solche Systeme bei einer Folgefahrt bis in den Stillstand regeln.

Neben diesen herkömmlichen Geschwindigkeitsregelsystemen sind auch Geschwindigkeitsregelsysteme bekannt, bei denen die Fahrzeuggeschwindigkeit nicht auf eine vorgegebene Sollgeschwindigkeit, sondern innerhalb eines vorgegebenen Geschwindigkeitsbereichs derart variiert wird, dass sich ein günstiger Verbrauch einstellt. So offenbart die DE 102 05 226 A1 eine Einrichtung zur Regelung der Geschwindigkeit auf einen eingestellten Sollwert durch automatische Regelung oder Steuerung des Antriebsaggregats, wobei dem Sollwert ein Wertebereich zugeordnet ist, in dem der Sollwert liegt. Die Einrichtung greift jedoch erst dann ein, wenn die Fahrzeuggeschwindigkeit außerhalb des Wertebereichs liegt. Dies führt bspw. bei einer Bergauffahrt dazu, dass die Geschwindigkeit innerhalb des Wertebereichs schnell abnimmt, d. h. es erfolgt keine Nachführung. Erst wenn die untere Grenze des Wertebereichs erreicht wird, wird beschleunigt. Durch eine derartige Ausgestaltung eines Geschwindigkeitsregelsystems ist es möglich, Kraftstoff zu sparen. Da dieses System jedoch erst eingreift, wenn eine der beiden Grenzen des Wertebereichs erreicht wird, wird das Fahrzeug nach erstmaligem Erreichen der unteren Grenze kontinuierlich auf dieser Geschwindigkeit gehalten.

Aus der DE 10 2005 017 965 A1 ist eine Kombination aus einem Geschwindigkeitsregelsystem zur Regelung der Geschwindigkeit auf einen vorgegebenen Sollwert, und einem Kraftstoffregelsystem zur Regelung des Kraftstoffverbrauchs auf einen vorgegebenen oder bis zu einem maximalen Kraftstoffstoffverbrauchswert bekannt, wobei die Kraftstoffverbrauchsregelung höher priorisiert ist. Ist bspw. ein Halten oder Erreichen der vorgegebenen Sollgeschwindigkeit unter Berücksichtigung des vorgegebenen (maximalen) Kraftstoffverbrauchswert nicht möglich, wird die Geschwindigkeitsregelung außer Kraft gesetzt oder eine andere Sollgeschwindigkeit vorgegebenen. Nachteilig ist bei einem solchen System, dass sehr schnell der Fall eintreten kann, dass die Sollgeschwindigkeit nicht mehr gehalten werden kann - die Geschwindigkeitsregelung würde dann deaktiviert werden. Eine automatische Geschwindigkeitsregelung ist dadurch kaum oder nur sehr kurzfristig möglich. Da der Kraftstoffverbrauchswert nicht überschritten werden darf, würde sich das Fahrzeug bei jeder Steigung nur sehr langsam vorwärtsbewegen - unter Umständen würde das Fahrzeug sogar stehen bleiben, da der Kraftstoffverbrauchswert nicht eingehalten werden kann. Dies kann zu gefährlichen Verkehrssituationen führen.

Aufgabe der Erfindung ist es, ein verbessertes Geschwindigkeitsregelsystem zur verbrauchsorientierten Geschwindigkeitsregelung anzugeben, welches einerseits eine optimale Kraftstoffeinsparung, gleichzeitig aber auch ein komfortables Fahren ermöglicht ohne dabei ein Verkehrshindernis darzustellen. Ein Integrieren z. B. in einen abstandsüberwachenden Tempomat (ACC) oder in einen Tempomat mit Bremseingriff (DCC) soll möglich sein.

Diese Aufgabe wird durch ein Geschwindigkeitsregelsystem nach Anspruch 1 gelöst. Vorteilhafte Weiterbildungen ergeben sich aus den abhängigen Ansprüchen.

Die Erfindung geht von einem Geschwindigkeitsregelsystem für Fahrzeuge aus, bei dem die Fahrzeuggeschwindigkeit zur verbrauchsorientierten Regelung nicht auf eine Sollgeschwindigkeit, sondern innerhalb eines vorgegebenen Sollgeschwindigkeitsbereichs geregelt wird. Das Geschwindigkeitsregelsystem umfasst zumindest eine Bedieneinheit zum Aktivieren der verbrauchsorientierten Geschwindigkeitsregelung und einer Steuereinheit, die bei aktivierter verbrauchsorientierter Geschwindigkeitsregelung die Fahrzeuggeschwindigkeit innerhalb des vorgegebenen Sollgeschwindigkeitsbereichs durch Steuerung der Antriebseinheit regelt. Erfindungsgemäß wird die Fahrzeuggeschwindigkeit im Rahmen der verbrauchsorientierten Geschwindigkeitsregelung unter Berücksichtigung eines vorgegebenen maximalen Energieverbrauchswerts derart geregelt, dass der vorgegebene maximale Energieverbrauchswert nur solange nicht überschritten wird, solange unter Berücksichtigung des Energieverbrauchswerts eine Fahrzeuggeschwindigkeit einregelbar ist, die innerhalb des vorgegebenen Sollgeschwindigkeitsbereichs liegt, d .h. innerhalb des Sollgeschwindigkeitsbereichs wird die Energiezufuhr für die Antriebseinheit auf einen maximalen Energieverbrauchswert reduziert. Ist ein Einregeln der Geschwindigkeit auf eine Geschwindigkeit innerhalb des vorgegebenen Sollgeschwindigkeitsbereichs nicht mehr möglich, kann zur Geschwindigkeitsregelung der vorgegebene Energieverbrauchswert unberücksichtigt bleiben, d. h. die Geschwindigkeitsregelung ist höher priorisiert als die Berücksichtigung des vorgegebenen maximalen Energieverbrauchswerts.

Der maximale Energieverbrauchswert bzw. die reduzierte Energiezufuhr wird bspw. in Abhängigkeit eines bekannten oder ermittelten, motorspezifischen Durchschnittsverbrauchswert vorgegeben, insbesondere in Abhängigkeit des motorspezifischen Durchschnittsverbrauchs nach der EU-Fahrzyklus Richtlinie RL 93 - 116 - EWG. Abhängig von der im Fahrzeug verbauten Antriebseinheit (z. B. Verbrennungsmotor, Elektromotor, Hybridantrieb, Solarantrieb etc.) handelt es sich bei dem Energieverbrauchswert bspw. um einen Kraftstoffverbrauchswert und/oder einen Energieverbrauchswert, der den Verbrauch an entsprechender Energie für den Antrieb wiedergibt.

Der Sollgeschwindigkeitsbereich kann in einer ersten Alternative systemseitig derart vorgegeben werden, dass sich für den Fahrer für einen bestimmten Fahrbetrieb (z. B. Stadtbetrieb, Landstraßenbetrieb oder Autobahnbetrieb) eine angenehme Geschwindigkeit einstellt. Bspw. wäre für den Landstraßenbetrieb in Deutschland ein Sollgeschwindigkeitsbereich zwischen 85 km/h und 100 km/h und für den Autobahnbetrieb ein Sollgeschwindigkeitsbereich zwischen 115 km/h und 135 km/h denkbar. Eine (wesentlich) höhere Obergrenze des Sollgeschwindigkeitsbereichs im Autobahnbetrieb ist nicht unbedingt sinnvoll, da der Sollgeschwindigkeitsbereich einerseits nicht zu groß vorgegeben werden sollte und andererseits der Fahrer bei gewünschten höheren Geschwindigkeiten in der Regel nicht auf den Verbrauch achtet. Unabhängig davon ist es möglich, auch einen Hochgeschwindigkeitsmodus einzurichten. Praktisch ist jeder Sollgeschwindigkeitsbereich realisierbar.

Die Grenzen des zumindest einen Sollgeschwindigkeitsbereichs können bspw. in Abhängigkeit von vorgegebenen straßen- oder bereichsspezifischen Geschwindigkeitsbegrenzungen eingerichtet werden, welche wiederum länderspezifisch sein können.

Idealerweise lassen sich die Grenzen des systemseitig vorgegebenen Sollgeschwindigkeitsbereichs innerhalb gewisser Grenzen durch den Fahrer beeinflussen, so dass der Sollbereich noch besser an dessen Fahrweise bei bestimmten Fahrbetrieben abgestimmt werden kann. Dabei wird die Berücksichtigung der jeweils länderspezifisch gesetzlich vorgeschriebenen Höchstgeschwindigkeiten und/oder auch Mindestgeschwindigkeiten empfohlen.

Vorteilhafterweise lässt sich bei dieser ersten Alternative die verbrauchsorientierte Geschwindigkeitsregelung bei Betätigung eines entsprechenden Bedienelements (z. B. durch langes Drücken des Tempomathebels) nur dann aktivieren, wenn zum Zeitpunkt der Betätigung des Bedienelements die aktuelle Fahrzeuggeschwindigkeit innerhalb des vorgegebenen Sollgeschwindigkeitsbereichs liegt. Anderenfalls schaltet sich bspw. der konventionelle Tempomat ein.

Sind bspw. mehrere Sollgeschwindigkeitsbereiche für verschiedene Fahrbetriebe systemseitig vorgegebenen, die sich vorteilhafterweise nicht überlappen, wird bei Betätigung des entsprechenden Bedienelements für die verbrausorientierte Geschwindigkeitsregelung derjenige Sollgeschwindigkeitsbereich zugrunde gelegt, innerhalb dessen sich die aktuelle Geschwindigkeit befindet. Liegt die aktuelle Geschwindigkeit in keinem der vorgegebenen Sollgeschwindigkeitsbereiche, lässt sich die verbrauchsorientierte Geschwindigkeitsregelung nicht aktivieren. Vorteilhafterweise kann stattdessen eine herkömmliche Geschwindigkeitsregelung auf die aktuelle Geschwindigkeit als Sollgeschwindigkeit oder eine anderen vorgegebene Sollgeschwindigkeit aktiviert werden.

In einer zweiten Alternative ist es Voraussetzung, dass das Fahrzeug z. B. mit einer "ECO"-Taste ausgerüstet wird, die der Fahrer vor Nutzung der verbrauchsorientierten Geschwindigkeitsregelung aktivieren muss - das Fahrzeug wird praktisch durch das Aktivieren der "ECO"-Taste in den Zustand versetzt, verbrauchsorientiert zu fahren. Wird die "ECO"-Taste nicht aktiviert, so funktioniert nur der konventionelle Tempomat. Der Fahrzeugzustand, verbrauchsorientiert zu fahren, kann so lange erhalten bleiben, bis der Fahrer das entsprechende Bedienelement (z. B. "ECO"-Taste) wieder deaktiviert. Für die im Folgenden aufgeführten Ausführungen dieser zweiten Alternative wird vorausgesetzt, dass die "ECO"-Taste aktiviert ist und sich das Fahrzeug im Zustand verbrauchsorientiert zu fahren befindet.

In dieser zweiten Alternative kann der Sollgeschwindigkeitsbereich bzw. können die Grenzen des Sollgeschwindigkeitsbereichs in Abhängigkeit der bei erkanntem Aktivierungswunsch der verbrauchsorientierten Geschwindigkeitsregelung (Betätigung des Bedienelements zum Aktivieren) aktuellen Fahrzeuggeschwindigkeit vorgegeben werden, d. h. der Fahrer kann die verbrauchsorientierte Geschwindigkeitsregelung quasi bei jeder aktuellen Geschwindigkeit aktivieren, wobei der Sollgeschwindigkeitsbereich dann aufgrund der aktuellen Fahrzeuggeschwindigkeit vorgegeben wird.

Idealerweise wird bei Betätigung des Bedienelements zum Aktivieren der verbrauchsorientierten Geschwindigkeitsregelung als Obergrenze des Sollgeschwindigkeitsbereichs die aktuelle Fahrzeuggeschwindigkeit vorgegebenen. Als Untergrenze des Sollgeschwindigkeitsbereichs wird dann eine von der aktuellen Geschwindigkeit bzw. der oberen Grenze abhängig kleinere Geschwindigkeit vorgegebenen. Diese kann bspw. derart vorgegeben werden, dass die untere Grenze um einen vorgegebenen Prozentsatz (z. B. 20%) oder um einen vorgegebenen (geschwindigkeitsabhängigen) absoluten Geschwindigkeitswert kleiner als die obere Grenze des Sollgeschwindigkeitsbereichs ist. Wird bspw. bei einer aktuellen Fahrzeuggeschwindigkeit von 100 km/h das Bedienelement zum Aktivieren der verbrauchsorientierten Geschwindigkeitsregelung betätigt, wird als obere Grenze des Sollgeschwindigkeitsbereichs 100 km/h und als untere Grenze 80 km/h (obere Grenzgeschwindigkeit minus 20%) vorgegebenen. Analog wird bei einer Aktivierung bei 150 km/h als obere Grenze des Sollgeschwindigkeitsbereichs 150 km/h und als untere Grenze 120 km/h vorgegebenen. Bei einer Aktivierung bei 50 km/h erstreckt sich der Sollgeschwindigkeitsbereich von 40 km/h bis 50 km/h.

Der Vorteil dieser Alternative zur Sollgeschwindigkeitsbereich-Vorgabe ist darin zu sehen, dass der Fahrer bei jeder Geschwindigkeit die verbrauchsorientierte Geschwindigkeitsregelung aktivieren kann und die Vorgabe des Sollgeschwindigkeitsbereichs für den Fahrer intuitiv ist. Der Fahrer definiert somit die zu fahrende Höchstgeschwindigkeit erlebbar selbst.

Wie bei herkömmlichen Systemen lässt sich die verbrauchsorientierte Geschwindigkeitsregelung durch Betätigung des Gaspedals jederzeit zum Beschleunigen vorübergehend überpriorisieren. Ist der Beschleunigungsvorgang abgeschlossen, so agiert die verbrauchsorientierte Geschwindigkeitsregelung erst dann wieder, wenn die Fahrzeuggeschwindigkeit im Sollgeschwindigkeitsbereich liegt. Das Fahrzeug wird praktisch nicht abrupt abgebremst sondern rollt bis die Fahrzeuggeschwindigkeit wieder im Sollgeschwindigkeitsbereich liegt. Durch Betätigung des Bremspedals wird die verbrauchsorientierte Geschwindigkeitsregelung in jedem Falle sofort deaktiviert.

Es wird in einer Auslegung während der verbrauchsorientierten Geschwindigkeitsregelung innerhalb des vorgegebenen Sollgeschwindigkeitsbereichs die Geschwindigkeit des Fahrzeugs derart geregelt, dass sich unter Berücksichtigung des maximalen Energieverbrauchswerts eine maximal mögliche Geschwindigkeit einstellt.

Alternativ dazu wird in einer anderen Auslegung während der verbrauchsorientierten Geschwindigkeitsregelung innerhalb des vorgegebenen Sollgeschwindigkeitsbereichs die Geschwindigkeit des Fahrzeugs derart geregelt, dass sich unter Berücksichtigung des maximalen Energieverbrauchswerts eine minimal mögliche Geschwindigkeit einstellt.

Aufgrund der Berücksichtigung des maximalen Energieverbrauchswerts bei der verbrauchsorientierten Geschwindigkeitsregelung kann der Fall eintreten, dass die Fahrzeuggeschwindigkeit nicht mehr innerhalb des Sollgeschwindigkeitsbereichs gehalten werden kann. Um den Sollgeschwindigkeitsbereich wieder erreichen oder halten zu können, ist vorteilhafterweise das Geschwindigkeitsregelsystem derart ausgestaltet, dass das Steuergerät bei Erreichen oder Unterschreiten der unteren Grenze des vorgegebenen Sollgeschwindigkeitsbereichs die Fahrzeuggeschwindigkeit nicht mehr unter Berücksichtigung des vorgegebenen maximalen Energieverbrauchswerts, sondern unabhängig vom diesem regelt, so dass die untere Grenze des Sollgeschwindigkeitsbereichs wieder erreicht oder gehalten werden kann. Somit wird vermieden, dass das Fahrzeug ein Verkehrshindernis darstellt. Derartige Betriebszustände treten in der Regel bei Steigungen auf. Insbesondere kann in diesem Fall dann unabhängig vom Energieverbrauchswert auf eine Fahrzeuggeschwindigkeit eingeregelt werden, die zumindest der unteren Grenze des Sollgeschwindigkeitsbereichs entspricht, oder größer als diese ist.

Kann die untere Grenze des Sollgeschwindigkeitsbereichs voraussichtlich auch wieder unter Berücksichtigung des vorgegebenen maximalen Energieverbrauchswerts eingeregelt oder zumindest gehalten werden, erfolgt die Geschwindigkeitsregelung wieder unter Berücksichtigung des vorgegebenen maximalen Energieverbrauchswerts. Vorteilhafterweise ist demnach die vom Energieverbrauchswert unabhängige Geschwindigkeitsregelung nur solange aktiv, bis eine vorgegebene erste Mindestgeschwindigkeit innerhalb des Sollgeschwindigkeitsbereichs erreicht ist, oder bis die vorgegebene erste Mindestgeschwindigkeit erreicht und für ein vorgegebenes erstes Zeitintervall durch Aufbringen eines Energieverbrauchswerts, der zumindest nicht größer als der vorgegebene maximale Energieverbrauchswert ist, gehalten wurde. Der vorgegebene erste Mindestgeschwindigkeitswert kann bspw. die untere Grenze des Sollgeschwindigkeitsbereichs oder größer als diese untere Grenze sein.

Um noch mehr Energie einsparen zu können, kann bei erkannter Bergabfahrt bei Fahrzeugen mit einer automatisch betätigbaren Kupplung der Kraftschluss zwischen Antriebseinheit und Getriebeeinheit bzw. antreibbaren Rädern durch Öffnen der Kupplung unterbrochen werden und die Energiezufuhr für die Antriebseinheit gegen Null gehend reduziert werden. Gemäß einer ersten Alternative kann diese Kraftschlussunterbrechung und Energiezufuhrreduzierung dann vorgenommen werden, wenn Schubbetrieb vorliegt (d. h. der Energieverbrauchswert läuft gegen Null) und die Fahrzeuggeschwindigkeit innerhalb des Sollgeschwindigkeitsbereichs konstant bleibt oder ansteigt. Wird dies von der Steuereinheit erkannt oder mittels eines entsprechenden Signals angezeigt, sendet die Steuereinheit ein Kraftschlussunterbrechungssignal zur Unterbrechung des Kraftschlusses zwischen Antriebseinheit und Getriebeeinheit bzw. antreibbaren Rädern des Fahrzeugs aus.

Alternativ sendet die Steuereinheit erst bei Erreichen oder Überschreiten der oberen Grenze des Sollgeschwindigkeitsbereichs ein Kraftschlussunterbrechungssignal zur Unterbrechung des Kraftschlusses zwischen Antriebseinheit und Getriebeeinheit bzw. antreibbaren Rädern des Fahrzeugs aus. Dadurch kann sicher gestellt werden, dass das Fahrzeug erst durch eine entsprechende Energiezufuhr möglichst rasch die obere Grenze des Sollgeschwindigkeitsbereichs erreicht und erst dann, wenn die Geschwindigkeit trotzdem weiter steigt (z. B. aufgrund des Schubbetriebs) die Kupplung öffnet. Ein minimales Überschreiten der oberen Grenze des Sollgeschwindigkeitsbereichs kann bspw. aufgrund des Schubbetriebs deshalb eintreten, weil während der verbrauchsorientierten Geschwindigkeitsregelung innerhalb des Sollgeschwindigkeitsbereichs kein automatischer Bremseingriff stattfindet.

Um den vorgegebenen Sollgeschwindigkeitsbereich Halten oder Erreichen zu können, wird (bei beiden Alternativen) ein Bremseingriff eingeleitet, so dass sich eine maximal erlaubte Fahrzeuggeschwindigkeit einstellt, die der oberen Grenze des Sollgeschwindigkeitsbereichs entspricht.

Wird bei geöffneter Kupplung eine vorgegebene zweite Mindestgeschwindigkeit innerhalb des Sollgeschwindigkeitsbereichs ohne Bremseingriff erreicht oder ohne Bremseingriff gehalten (d. h. die Hangabtriebskraft ist nicht mehr vorhanden und die Fahrzeuggeschwindigkeit reduziert sich), sendet die Steuereinheit ein Kraftschlussschließsignal zum Wiederherstellen des Kraftschluss zwischen Antriebseinheit und Getriebeeinheit bzw. antreibbaren Rädern aus. Daraufhin wird der Kraftschluss wieder hergestellt und die Geschwindigkeitsregelung erfolgt wieder unter Berücksichtigung des vorgegebenen maximalen Energieverbrauchswerts in der Weise, dass dieser maximale Energieverbrauchswert nicht überschritten wird. Als zweite Mindestgeschwindigkeit kann die obere Grenze des Sollgeschwindigkeitsbereichs oder die unter Grenze des Sollgeschwindigkeitsbereichs oder irgendeine Geschwindigkeit innerhalb des Sollgeschwindigkeitsbereichs vorgegeben werden.

Die Erfindung wird nun anhand von Ausführungsbeispielen näher erläutert. Dabei zeigt
Fig. 1 ein Geschwindigkeitsregelsystem zur verbrauchsorientierten Geschwindigkeitsregelung der Fahrzeuggeschwindigkeit,
Fig. 2 einen ersten Ablaufplan zur Darstellung einer ersten erfindungsgemäßen Alternative einer verbrauchsorientierten Geschwindigkeitsregelung,
Fig. 3 einen zweiten Ablaufplan zur Darstellung einer zweiten erfindungsgemäßen Alternative einer verbrauchsorientierten Geschwindigkeitsregelung,
Fig. 4 einen dritten Ablaufplan zur Darstellung einer dritten erfindungsgemäßen Alternative einer verbrauchsorientierten Geschwindigkeitsregelung, und
Fig. 5 einen vierten Ablaufplan zur Darstellung einer vierten erfindungsgemäßen Alternative einer verbrauchsorientierten Geschwindigkeitsregelung.

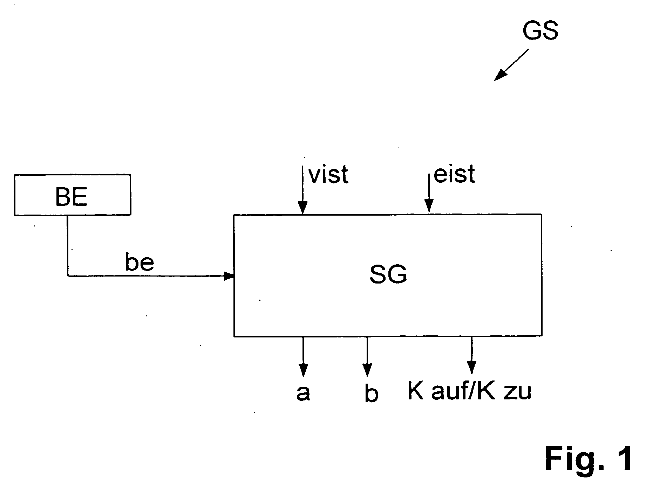

Die Fig. 1 zeigt ein Geschwindigkeitsregelsystem GS für Fahrzeuge zur verbrauchsorientierten Geschwindigkeitsregelung innerhalb eines vorgegebenen Sollgeschwindigkeitsbereichs. Das System GS umfasst eine Bedieneinheit BE zum Aktivieren der verbrauchsorientierten Geschwindigkeitsregelung und eine Steuereinheit SG, die bei aktivierter verbrauchsorientierter Geschwindigkeitsregelung die Fahrzeuggeschwindigkeit innerhalb des vorgegebenen Sollgeschwindigkeitsbereichs unter Berücksichtigung einen vorgegebenen maximalen Energieverbrauchswerts regelt. Das Bedienelement BE kann bspw. ein Hebel oder eine Schalteranordnung sein, wie sie bei herkömmlichen Geschwindigkeitsregelsystemen bekannt ist. Wird das Bedienelement BE in vorgegebener Weise betätigt, wird an die Steuereinheit SG ein entsprechendes Betätigungssignal be gesendet, welches der Steuereinheit SG anzeigt, dass der Fahrer eine Aktivierung der verbrauchsoptimierten Geschwindigkeitsregelung wünscht.

Zusätzlich zu dem Betätigungssignal be erhält die Steuereinheit SG noch eine Vielzahl weiterer Signale, welche für die verbrauchsorientierte Geschwindigkeitsregelung notwendig sind. Bspw. erhält die Steuereinheit SG ein Signal betreffend die aktuelle Fahrzeuggeschwindigkeit vist, sowie ein Signal betreffend den aktuellen Energieverbrauchswert eist. Hier nicht dargestellt, aber ebenfalls möglich ist, dass die Steuereinheit die automatisch oder vom Fahrer geänderten Grenzen des zumindest einen vorgegebenen Sollgeschwindigkeitsbereiche erhält. Diese Grenzen können auch innerhalb eines Speichers in der Steuereinheit hinterlegt sein.

Um die Fahrzeuggeschwindigkeit unter Berücksichtigung des vorgegebenen maximalen Energieverbrauchswerts regeln zu können, sendet die Steuereinheit zumindest ein Antriebssignal a an eine Ansteuereinheit zum bedarfsgerechten Ansteuern der Antriebseinheit, und ein Bremssignal b an ein Bremssystem zum bedarfsgerechten Ansteuern des Bremssystems. Prinzipiell wird ein Bremssignal b nur dann ausgesendet, wenn dies zum Halten oder Erreichen der oberen Grenze des Sollgeschwindigkeitsbereichs erforderlich ist. Ansonsten erfolgt kein Bremseingriff. Handelt es sich bei dem Fahrzeug, dessen Geschwindigkeit verbrauchsorientiert geregelt werden soll, um ein Fahrzeug mit einer automatisch betätigbaren Kupplung zum Unterbrechen der Kraftübertragung von der Antriebseinheit auf die angetriebenen Räder, ist die Steuereinheit dazu ausgebildet, ein Kraftschlussunterbrechungssignal "K auf" und ein Kraftschlussschließsignal "K zu" an eine die Kupplung ansteuerbare Einheit zu senden.

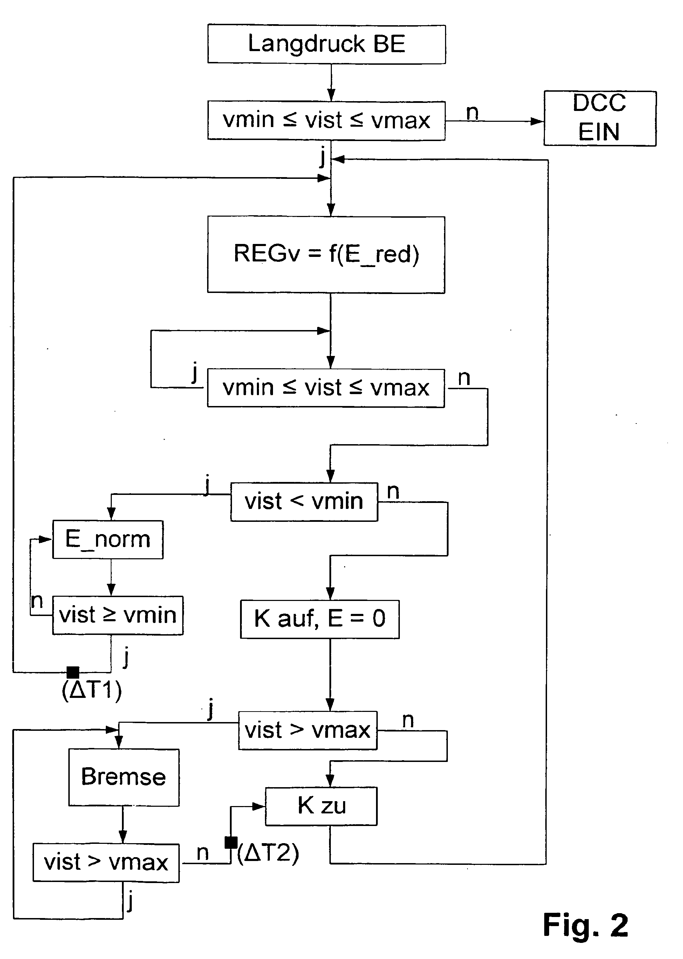

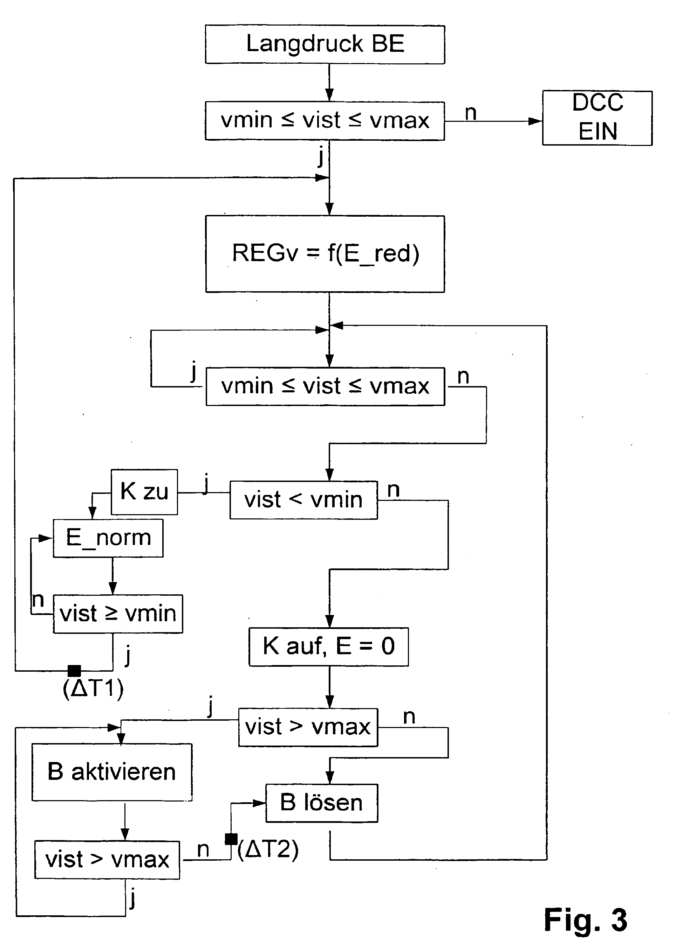

Anhand der beiden nächsten Fig. 2 und 3 werden nun zwei verschiedene Alternativen des Geschwindigkeitsregelsystems zur verbrauchsorientierten Geschwindigkeitsregelung innerhalb eines vorgegebenen Sollgeschwindigkeitsbereichs in vereinfachter Weise dargestellt. Prinzipiell ist in beiden Alternativen die verbrauchsorientierte Geschwindigkeitsregelung durch ein längeres Drücken eines vorhandenen Tempomathebels BE in eine definierte Richtung aktivierbar, durch Betätigung des Gaspedals (wie bereits beschrieben) überpriorisierbar, und durch Betätigung des Bremspedals deaktivierbar. Weiter ist für die verbrauchsorientierte Geschwindigkeitsregelung systemseitig ein Sollgeschwindigkeitsbereich für den Landstraßenbetrieb vorgesehen, der durch eine untere Grenze vmin von 85 km/h und eine obere Grenze vmax von 100km/h definiert ist. Zusätzlich könnte noch ein zweiter Sollgeschwindigkeitsbereich für den Autobahnbetrieb zwischen 115km/h und 135 km/h vorgesehen sein, der in diesen Beispielen jedoch nicht berücksichtigt wird.

Zu Beginn beider Ablaufdiagramme wird überprüft, ob das vorhandene Bedienelement BE zum Aktivieren der verbrauchsorientierten Geschwindigkeitsregelung in vorgegebener Weise betätigt wurde. Erfolgt ein entsprechender Langdruck des Tempomathebels BE, wird im nächsten Schritt überprüft, ob die aktuelle Geschwindigkeit vist innerhalb des vorgegebenen Sollgeschwindigkeitsbereichs liegt, der durch die unter Grenze vmin und die obere Grenze vmax definiert ist.

Liegt die aktuelle Fahrzeuggeschwindigkeit vist nicht zwischen der unteren Grenze vmin und der oberen Grenze vmax, wird anstelle der verbrauchsorientierten Geschwindigkeitsregelung eine im Fahrzeug vorhandene herkömmliche Geschwindigkeitsregelung DCC auf die aktuelle Fahrzeuggeschwindigkeit als Sollgeschwindigkeit aktiviert. Liegt die aktuelle Fahrzeuggeschwindigkeit vist jedoch zwischen der unter Grenze vmin und der oberen Grenze vmax, wird die verbrauchsorientierte Geschwindigkeitsregelung REGv aktiviert. Dabei erfolgt die Regelung der Geschwindigkeit innerhalb des vorgegebenen Sollgeschwindigkeitsbereichs zwischen vmin und vmax unter Berücksichtigung eines vorgegebenen maximalen Energieverbrauchswerts E_red (in diesem Beispiel handelt es sich hierbei um einen Kraftstoffverbrauchswert) derart, dass der vorgegebene maximale Energieverbrauchswert E_red solange nicht überschritten wird, solange unter Berücksichtigung dieses Energieverbrauchswertes E_red durch entsprechende Ansteuerung der Antriebseinheit eine Fahrzeuggeschwindigkeit einregelbar ist, die innerhalb des vorgegebenen Sollgeschwindigkeitsbereichs zwischen vmin und vmax liegt. Demnach wird die maximale Energiezufuhr für die Antriebseinheit auf einen maximalen Energieverbrauchswert reduziert, der bspw. 60 % unterhalb des motorspezifischen Durchschnittverbrauchswertes dieser Antriebseinheit bzw. diese Motors liegt.

Diese verbrauchsorientierte Geschwindigkeitsregelung REGv erfolgt nur solange, solange die aktuelle Fahrzeuggeschwindigkeit vist innerhalb des Sollgeschwindigkeitsbereichs zwischen vmin und vmax liegt. Wird festgestellt, dass die aktuelle Fahrzeuggeschwindigkeit vist nicht mehr innerhalb des Sollgeschwindigkeitsbereichs zwischen vmin und vmax liegt, wird im nächsten Schritt abgefragt, ob die aktuelle Fahrzeuggeschwindigkeit vist kleiner als die untere Grenze vmin des Sollgeschwindigkeitsbereichs ist. Dies kann bspw. an einer Steigung auftreten, da der maximale Energieverbrauchswert dann nicht zum Halten der Geschwindigkeit innerhalb des vorgegebenen Sollgeschwindigkeitsbereichs zwischen vmin und vmax ausreicht. Ist dies der Fall, wird zum Erreichen der unter Grenze vmin des Sollgeschwindigkeitsbereichs die Energieverbrauchsbegrenzung aufgehoben und es erfolgt eine Geschwindigkeitsregelung mit einem unbegrenzten Energieverbrauchswert E_norm. Diese verbrauchsunabhängige Geschwindigkeitsregelung erfolgt solange, bis die untere Grenze vmin des Sollgeschwindigkeitsbereichs wieder erreicht ist und ggf. ein vorgegebenes Zeitintervall ΔT1 abgelaufen ist, innerhalb dessen der Energieverbrauchswert zumindest zum Halten der Untergrenze vmin des Sollgeschwindigkeitsbereichs nicht größer als der vorgegebene maximale Energieverbrauchswert E_red ist. Anstelle der Untergrenze vmin kann auch eine andere Mindestgeschwindigkeit innerhalb des Sollgeschwindigkeitsbereichs zwischen vmin und vmax als Grenzgeschwindigkeit zum Umschalten von der verbrauchsunabhängigen Geschwindigkeitsregelung mit einem angeforderten Energieverbrauchswert E_norm in die verbrauchsorientierte Geschwindigkeitsregelung REGv unter Berücksichtigung des vorgegebenen maximalen reduzierten Energieverbrauchswerts E_red zugrunde gelegt werden.

Wird festgestellt, dass die aktuelle Fahrzeuggeschwindigkeit vist nicht mehr innerhalb des Sollgeschwindigkeitsbereichs zwischen vmin und vmax liegt und die aktuelle Fahrzeuggeschwindigkeit vist nicht kleiner als die untere Grenze vmin des Sollgeschwindigkeitsbereichs ist, ist sie größer/gleich wie die obere Grenze vmax des Sollgeschwindigkeitsbereichs. Da dieser Fall eintreten kann, wenn sich die Fahrzeuggeschwindigkeit aufgrund von z. B. einem vorhandenen Gefälle oder z.B. durch starken Rückenwind erhöht, da während der verbrauchsorientierten Geschwindigkeitsregelung zwischen vmin und vmax kein automatischer Bremseingriff vorgenommen wird, wird davon ausgegangen, dass sich das Fahrzeug im Schubbetrieb befindet. Daraufhin sendet die Steuereinheit ein Kraftschlussunterbrechungssignal K auf an eine Kupplungsteuereinheit, die daraufhin die Kupplung öffnet und den Kraftschluss zwischen Antriebseinheit und antreibbaren Rädern unterbricht. Weiter wird die Energiezufuhr für die Antriebseinheit gegen Null reduziert (oder dort gehalten, da sie während des Schubbetriebs des Fahrzeugs ohnehin gegen Null läuft), da ein Antrieb aufgrund des unterbrochenen Kraftschlusses ohnehin nicht möglich und auch nicht sinnvoll ist. Anschließend wird (nochmals) abgefragt, ob die aktuelle Fahrzeuggeschwindigkeit vist immer noch größer ist als die obere Grenzgeschwindigkeit vmax.

Ist dies der Fall, wird gemäß dem in Fig. 3 dargestellten Ausführungsbeispiel ein automatischer Bremseingriff B - wenn möglich mit Energierückgewinnung - eingeleitet. Der Bremseingriff B wird solange vorgenommen, bis zumindest die Obergrenze vmax des vorgegebenen Sollgeschwindigkeitsbereichs wieder erreicht ist und - analog zu oben - ggf. ein vorgegebenes zweites Zeitintervall ΔT2 abgelaufen ist, innerhalb dessen kein Bremseingriff zu Erreichen oder Halten der oberen Grenze vmax des Sollgeschwindigkeitsbereichs vorgenommen wird. Liegt vorangegangene Bedingung vor, wird die Kupplung wieder geschlossen und es erfolgt wieder eine verbrauchsorientierte Geschwindigkeitsregelung REGv unter Berücksichtigung des vorgegebenen maximalen reduzierten Energieverbrauchswerts E_red.

Anstelle der Obergrenze vmax kann auch eine andere zweite Mindestgeschwindigkeit innerhalb des Sollgeschwindigkeitsbereichs zwischen vmin und vmax als Grenzgeschwindigkeit zum Umschalten in die verbrauchsorientierte Geschwindigkeitsregelung REGv unter Berücksichtigung des vorgegebenen maximalen reduzierten Energieverbrauchswerts E_red zugrunde gelegt werden. Ein derartiges Beispiel ist aus der Fig. 3 ersichtlich. Hier wird der automatische Bremseingriff zwar ebenfalls dann zurückgenommen, wenn die Obergrenze vmax erreicht ist, allerdings wird die Kupplung erst geschlossen, wenn die Untergrenze vmin des Sollgeschwindigkeitsbereichs unterschritten wird. Dadurch werden die kinetische und potentielle Energie des Fahrzeugs (oder andere Energieeinwirkungen auf das Fahrzeug) noch bis zum Erreichen der Untergrenze vmin ausgeschöpft.

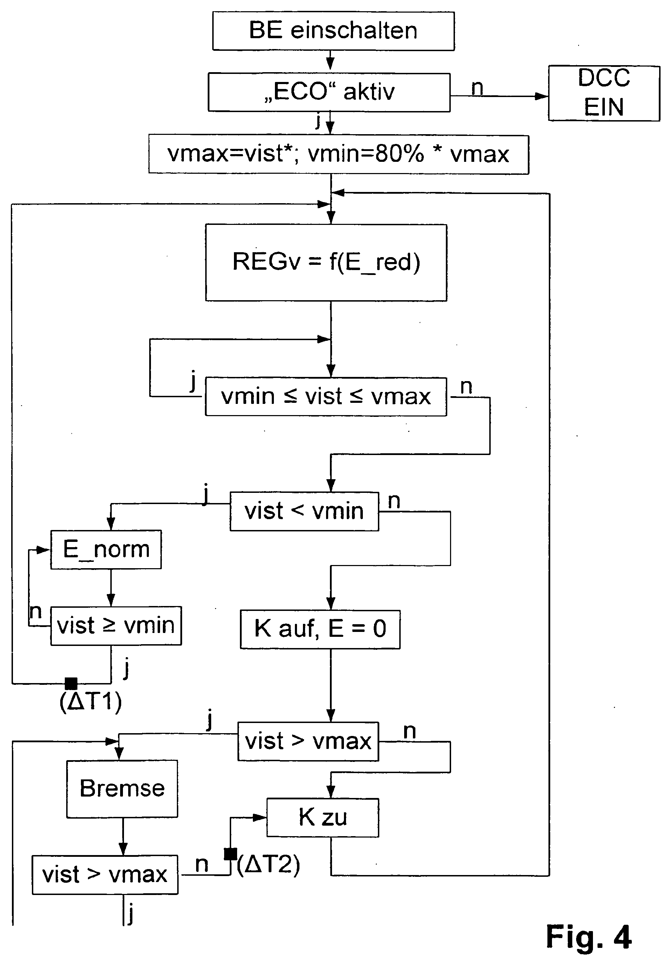

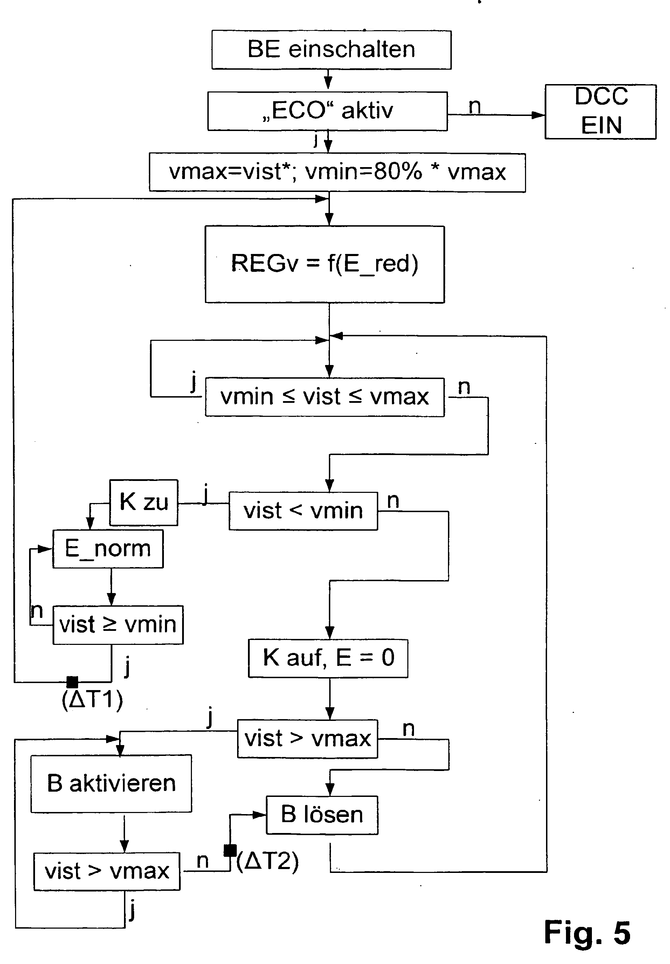

Alternativ zu den beiden in Fig. 2 und 3 beschriebenen Abläufen kann - wie ergänzend in Fig. 4 und Fig. 5 dargestellt ist - der Sollgeschwindigkeitsbereich in Abhängigkeit der beim Aktivieren der verbrauchsorientierten Geschwindigkeitsregelung aktuellen Geschwindigkeit vorgegeben werden, wobei idealerweise als obere Grenze des Sollgeschwindigkeitsbereichs die aktuelle Geschwindigkeit, und als untere Grenze eine um einen vorgegebenen Prozentsatz (z. B. 20%) kleiner Geschwindigkeit als die aktuelle Geschwindigkeit vorgegeben wird.

Bei beiden Fig. 4 und 5 wird bei Betätigung des Bedienelements BE zum Aktivieren der verbrauchsorientierten Geschwindigkeitsregelung geprüft, ob sich das Fahrzeug in einem verbrauchsorientierten Modus befindet, d. h. es wird geprüft, ob "ECO" aktiv ist. Dieser verbrauchsorientierte Modus kann durch den Fahrer bspw. mittels eines ECO-Tasters aktiviert werden. Nur wenn der ECO-Modus aktiv ist, kann die verbrauchsorientierte Geschwindigkeitsregelung gestartet werden. Wenn dieser Modus aktiv ist, wird im nächsten Schritt der Sollgeschwindigkeitsbereich für die verbrauchsorientierte Geschwindigkeitsregelung vorgegeben. Als obere Grenze vmax wird die zum Zeitpunkt der Betätigung des Bedienelements BE aktuelle Geschwindigkeit Vist* vorgegeben, als unter Grenze vmin bspw. 80% der oberen Grenze vmax. Nach Vorgabe des Sollgeschwindigkeitsbereichs wird in Fig. 4 analog dem in der Fig. 2 dargestellten Ablauf zur verbrauchsorientierten Geschwindigkeitsregelung, und in Fig. 5 analog dem in der Fig. 3 dargestellten Ablauf zur verbrauchsorientierten Geschwindigkeitsregelung vorgegangen.

Befindet sich das Fahrzeug bei Betätigung des Bedienelements BE zur Aktivierung der verbrauchsorientierten Geschwindigkeitsregelung jedoch nicht in einem sog. ECO-Modus, wird anstelle der verbrauchsorientierten Geschwindigkeitsregelung eine herkömmliche Geschwindigkeitsregelung DCC auf die aktuelle Geschwindigkeit aktiviert.

Das erfindungsgemäße Geschwindigkeitsregelsystem bietet somit den Vorteil einer verbrauchsoptimierten Geschwindigkeitsregelung innerhalb des vorgegebenen Sollgeschwindigkeitsbereichs. Verlangsamt sich das Fahrzeug aufgrund einer Steigung, wird die verbrauchsortierte Geschwindigkeitsregelung unterbrochen, bis wieder eine Geschwindigkeit innerhalb des Sollgeschwindigkeitsbereichs mit reduziertem Energieverbrauch möglich ist. Steigt die Geschwindigkeit bspw. aufgrund eines Gefälles über die vorgegebenen Obergrenze des Sollgeschwindigkeitsbereichs an, wird der Kraftschluss zwischen der Antriebseinheit und den antreibbaren Rädern unterbrochen und die Energiezufuhr ausgeschaltet, da zum Halten der Geschwindigkeit kein Treibstoff bzw. keine Energie benötigt wird. Ggf. wird bis zum Erreichen der oberen Grenze des Sollgeschwindigkeitsbereichs ein Bremseingriff (wenn vorhanden mit Energierückgewinnung) vorgenommen.

## Patentansprüche

1. Geschwindigkeitsregelsystem (GS) für Fahrzeuge zur verbrauchsorientierten Regelung der Fahrzeuggeschwindigkeit (vist) innerhalb eines vorgegebenen Sollgeschwindigkeitsbereichs (vmin;vmax), mit einer Bedieneinheit (BE) zum Aktivieren der verbrauchsorientierten Geschwindigkeitsregelung (REGv), und mit einer Steuereinheit (SG), die bei aktivierter verbrauchsorientierter Geschwindigkeitsregelung (REGv) die Fahrzeuggeschwindigkeit (vist) innerhalb des vorgegebenen Sollgeschwindigkeitsbereichs (vmin; vmax) unter Berücksichtigung eines vorgegebenen maximalen Energieverbrauchswerts (E_red) derart regelt, dass der vorgegebene maximale Energieverbrauchswert (E_red) nur solange nicht überschritten wird, solange unter Berücksichtigung des vorgegebenen Energieverbrauchswerts (E_red) eine Fahrzeuggeschwindigkeit (vist) einregelbar ist, die innerhalb des vorgegebenen Sollgeschwindigkeitsbereichs (vmin; vmax) liegt.

2. Geschwindigkeitsregelsystem nach Anspruch 1, **dadurch gekennzeichnet, dass** vorgegebene Energieverbrauchswert (E_red) kleiner als ein vorgegebener oder ermittelter motorspezifischer Durchschnitt-Energieverbrauchswert ist.

3. Geschwindigkeitsregelsystem nach Anspruch 1 oder 2, **dadurch gekennzeichnet, dass** bei Erreichen oder Unterschreiten der unteren Grenze des vorgegebenen Sollgeschwindigkeitsbereichs (vmin) die Fahrzeuggeschwindigkeit (vist) unabhängig vom vorgegebenen maximalen Energieverbrauchswert (E_red) auf eine Fahrzeuggeschwindigkeit einregelbar ist, die größer oder gleich der unteren Grenze des vorgegebenen Sollgeschwindigkeitsbereichs (vmin) ist.

4. Geschwindigkeitsregelsystem nach Anspruch 3, **dadurch gekennzeichnet, dass** die vom vorgegebenen Energieverbrauchswert (E_red) unabhängige Regelung der Fahrzeuggeschwindigkeit solange aktiv ist, bis eine vorgegebene erste Mindestgeschwindigkeit (vmin) erreicht ist, oder bis eine vorgegebene erste Mindestgeschwindigkeit (vmin) erreicht und für ein vorgegebenes erstes Zeitintervall (ΔT1) gehalten wurde, insbesondere mit einem Energieverbrauchswert (E_norm), der zumindest nicht größer ist, als der vorgegebenen maximale Energieverbrauchswert (E_red).

5. Geschwindigkeitsregelsystem nach einem der Ansprüche 1 -4, **dadurch gekennzeichnet, dass** die Steuereinheit (SG) bei erkanntem Schubbetrieb des Fahrzeugs und konstanter oder steigender Fahrzeuggeschwindigkeit (vist) innerhalb des vorgegebenen Sollgeschwindigkeitsbereichs (vmin;vmax) ein Kraftschlussunterbrechungssignal (K auf) zur Unterbrechung des Kraftschlusses zwischen Antriebseinheit und antreibbaren Rädern des Fahrzeugs aussendet.

6. Geschwindigkeitsregelsystem nach einem der Ansprüche 1 - 4, **dadurch gekennzeichnet, dass** die Steuereinheit (SG) bei Erreichen oder Überschreiten der oberen Grenze (vmax) des Sollgeschwindigkeitsbereichs ein Kraftschlussunterbrechungssignal (K auf) zur Unterbrechung des Kraftschlusses zwischen Antriebseinheit und antreibbaren Rädern des Fahrzeugs aussendet.

7. Geschwindigkeitsregelsystem nach Anspruch 5 oder 6, **dadurch gekennzeichnet, dass** die Steuereinheit (SG) bei Erreichen oder Unterschreiten einer vorgegebenen zweiten Mindestgeschwindigkeit (vmax) innerhalb des Sollgeschwindigkeitsbereichs (vmin; vmax) ein Kraftschlussschließsignal (K zu) zum Wiederherstellen des Kraftschluss zwischen Antriebseinheit und antreibbaren Rädern aussendet.

8. Geschwindigkeitsregelsystem nach einem der vorangegangenen Ansprüche, **dadurch gekennzeichnet, dass** die Steuereinheit (SG) bei Überschreiten der oberen Grenze (vmax) des Sollgeschwindigkeitsbereichs ein Bremssignal (b) zum Einleiten eines Bremseingriffs (B) aussendet.

9. Geschwindigkeitsregelsystem nach einem der vorangegangenen Ansprüche, **dadurch gekennzeichnet, dass** die verbrauchsorientierte Geschwindigkeitsregelung (REGv) zur Regelung der Fahrzeuggeschwindigkeit innerhalb des vorgegebenen Sollgeschwindigkeitsbereichs (vmin;vmax) bei Betätigung des Bedienelements (BE) nur dann aktivierbar ist, wenn die aktuelle Fahrzeuggeschwindigkeit (vist) innerhalb des vorgegebenen Sollgeschwindigkeitsbereichs (vmin;vmax) liegt.

10. Geschwindigkeitsregelsystem nach einem der vorangegangenen Ansprüche, **dadurch gekennzeichnet, dass** mindestens zwei Sollgeschwindigkeitsbereiche vorgegeben sind.

11. Geschwindigkeitsregelsystem nach Anspruch 10, **dadurch gekennzeichnet, dass** bei Betätigung des Bedienelements (BE) die Geschwindigkeitsregelung zur Regelung der Fahrzeuggeschwindigkeit innerhalb desjenigen Sollgeschwindigkeitsbereichs aktivierbar ist, in dessen Sollgeschwindigkeitsbereich die aktuelle Fahrzeuggeschwindigkeit (vist) liegt.

12. Geschwindigkeitsregelsystem nach einem der Ansprüche 1 - 8,
**dadurch gekennzeichnet, dass** bei Betätigung des Bedienelements (BE) zum Aktivieren der Geschwindigkeitsregelung innerhalb eines vorgegebenen Sollgeschwindigkeitsbereichs der Sollgeschwindigkeitsbereich in Abhängigkeit von der aktuellen Geschwindigkeit (vist*) vorgebbar ist, idealerweise derart, dass die aktuelle Geschwindigkeit (vist*) als oberen Grenze (vmax) des Sollgeschwindigkeitsbereichs und eine von der aktuellen Geschwindigkeit (vist*) abhängige kleinere Geschwindigkeit als untere Grenze (vmin) des Sollgeschwindigkeitsbereichs vorgegeben wird.

13. Geschwindigkeitsregelsystem nach Anspruch 12, **dadurch gekennzeichnet, dass** die verbrauchsorientierte Geschwindigkeitsregelung bei Betätigung des Bedienelements (BE) zum Aktivieren der verbrauchsorientierten Geschwindigkeitsregelung nur dann aktivierte wird, wenn sich das Fahrzeug in einem verbrauchsorientierten Modus (ECO) befindet, der vorteilhafterweise durch den Fahrer mittels eines entsprechenden Bedienelements aktivierbar ist.

## Claims

1. A cruise control system (GS) for vehicles for consumption-oriented control of the vehicle speed (vactual) within a predetermined desired speed range (vmin; vmax), with an operating unit (BE) to activate the consumption-oriented speed control (REGv), and with a control unit (SG) which, when the consumption-oriented speed control (REGv) is activated, controls the vehicle speed (vactual) within the predetermined desired speed range (vmin; vmax) taking into account a predetermined maximum energy consumption value (E_red) in such a way that the predetermined maximum energy consumption value (E_red) is not exceeded only as long as a vehicle speed (vactual) lying within the predetermined desired speed range (vmin; vmax) can be adjusted, taking into account the predetermined energy consumption value (E_red).

2. A cruise control system according to claim 1, **characterised in that** the predetermined energy consumption value (E_red) is less than a predetermined or determined engine-specific average energy consumption value.

3. A cruise control system according to claim 1 or 2, **characterised in that**, on reaching or falling below the lower limit of the predetermined desired speed range (vmin), the vehicle speed (vactual) can be adjusted independently of the predetermined maximum energy consumption value (E_red) to a vehicle speed, which is greater than or equal to the lower limit of the predetermined desired speed range (vmin).

4. A cruise control system according to claim 3, **characterised in that** the control of the vehicle speed, which is independent of the predetermined energy consumption value (E_red), is active until a predetermined first minimum speed (vmin) is reached, or until a predetermined first minimum speed (vmin) has been reached and has been maintained for a predetermined first time interval (ΔT1), especially with an energy consumption value (E_norm), which is at least not greater than the predetermined maximum energy consumption value (E_red).

5. A cruise control system according to any one of claims 1 to 4, **characterised in that** when coasting of the vehicle is recognised and at a constant or increasing vehicle speed (vactual) within the predetermined desired speed range (vmin; vmax), the control unit (SG) emits a force closure interrupt signal (Kopen) to interrupt the force closure between the drive unit and drivable wheels of the vehicle.

6. A cruise control system according to any one of claims 1 to 4, **characterised in that** when the upper limit (vmax) of the desired speed range is reached or exceeded, the control unit (SG) emits a force closure interrupt signal (Kopen) to interrupt the force closure between the drive unit and drivable wheels of the vehicle.

7. A cruise control system according to claim 5 or 6, **characterised in that** when a predetermined second minimum speed (vmin) is reached or fallen below within the desired speed range (vmin; vmax), the control unit (SG) emits a force closure closing signal (Kclosed) to restore the force closure between the drive unit and drivable wheels.

8. A cruise control system according to any one of the preceding claims, **characterised in that** when the upper limit (vmax) of the desired speed range is exceeded, the control unit (SG) emits a braking signal (b) to initiate a brake intervention (B).

9. A cruise control system according to any one of the preceding claims, **characterised in that** the consumption-oriented speed control (REGv) to control the vehicle speed within the predetermined desired speed range (vmin; vmax), on actuation of the operating element (BE), can only be activated if the current vehicle speed (vactual) is within the predetermined desired speed range (vmin; vmax).

10. A cruise control system according to any one of the preceding claims, **characterised in that** at least two desired speed ranges are predetermined.

11. A cruise control system according to claim 10, **characterised in that** upon actuation of the actuating element (BE), the speed control for controlling the vehicle speed can be activated within that desired speed range, in the desired speed range of which the current vehicle speed (vactual) lies.

12. A cruise control system according to any one of claims 1 to 8, **characterised in that** upon actuation of the operating element (BE) to activate the speed control within a predetermined desired speed range, the desired speed range can be predetermined as a function of the current speed (vactual*), ideally in such a way that the current speed (vactual*) is predetermined as the upper limit (vmax) of the desired speed range and a lower speed depending on the current speed (vactual*) is predetermined as the lower limit (vmin) of the desired speed range.

13. A cruise control system according to claim 12, **characterised in that** the consumption-oriented speed control, upon actuation of the operating element (BE) to activate the consumption-oriented speed control, is only activated if the vehicle is in a consumption-oriented mode (ECO), which can advantageously be activated by the driver by means of a corresponding operating element.

## Revendications

1. Système de régulation de vitesse (GS) pour réguler la vitesse du véhicule (vist) dans le sens de la consommation dans une plage prédéfinie de vitesse de consigne (vmin, vmax) comprenant :
- un élément de service (BE) pour activer la régulation de vitesse (REGv) orientée dans le sens de la consommation et une unité de commande (SG) qui, lorsque la régulation de vitesse orientée dans le sens de la consommation (REGv) régule la vitesse du véhicule (vist) dans la plage de vitesses de consigne prédéfinie (vmin, vmax) en tenant compte d'une consommation maximale d'énergie (E_red) prédéfinie régule de façon que la consommation d'énergie maximale prédéfinie (E_red) ne soit pas dépassée aussi longtemps qu'en peut réguler la vitesse du véhicule (vist) dans une plage de vitesse prédéfinie (vmin, vmax) en tenant compte de la consommation d'énergie prédéfinie (E_red),.

2. Système de régulation de vitesse selon la revendication 1,
**caractérisé en ce que**
la valeur prédéfinie de la consommation d'énergie (E_red) est inférieure à une consommation d'énergie, moyenne, spécifique du moteur, qui a été déterminée comme consommation prédéfinie.

3. Système de régulation de vitesse selon la revendication 1 ou 2,
**caractérisé en ce que**
lorsque l'on atteint ou passe en-dessous de la limite inférieure (vmin) de la plage de vitesse de consigne prédéfinie, la vitesse (vist) du véhicule est régulée, indépendamment de la consommation d'énergie maximale prédéfinie (E_red), sur une vitesse supérieure ou égale à la limite inférieure (vmin) de la plage prédéfinie de vitesse de consigne.

4. Système de régulation de vitesse selon la revendication 3,
**caractérisé en ce que**
la régulation de la vitesse du véhicule indépendante de la consommation d'énergie prédéfinie (E_red) reste activée jusqu'à ce que soit atteinte une première vitesse minimale prédéfinie (vmin) ou jusqu'à ce qu'une première vitesse minimale prédéfinie (vmin) soit atteinte et reste maintenue pendant une première durée prédéfinie (ΔT1), notamment avec une consommation d'énergie (E_norm) qui est non supérieure à la consommation d'énergie maximale prédéfinie (E_red).

5. Système de régulation de vitesse selon la revendication 1 à 4,
**caractérisé en ce que**
lorsqu'est détecté le mode de poussée du véhicule et à vitesse constante ou vitesse croissante du véhicule (vist) à l'intérieur de la plage de vitesse de consigne prédéfinie (vmin, vmax), l'unité de commande (SG) émet un signal de coupure de couple (K auf) pour interrompre la transmission du couple entre l'unité motrice et les roues motrices du véhicule.

6. Système de régulation de vitesse selon l'une des revendications 1 à 4,
**caractérisé en ce que**
lorsque l'on atteint ou dépasse la limite supérieure (vmax) de la plage de vitesse de consigne, l'unité de commande (SG) émet un signal de coupure de couple (K auf) pour couper la transmission du couple entre l'unité d'entraînement et les roues motrices du véhicule.

7. Système de régulation de vitesse selon la revendication 5 ou 6,
**caractérisé en ce que**
lorsque l'on atteint ou passe en-dessous d'une seconde valeur minimale prédéfinie (vmax) dans la plage de vitesse de consigne (vmin, vmax), l'unité de commande (SG) émet un signal de transmission du couple (K zu) pour rétablir la transmission du couple entre l'unité d'entraînement et les roues motrices.

8. Système de régulation de vitesse selon l'une des revendications précédentes,
**caractérisé en ce que**
lors du dépassement de la limite supérieure (vmax) de la place de vitesse de consigne, l'unité de commande (SG) émet un signal de freinage (b) pour lancer une action de freinage (B).

9. Système de régulation de vitesse selon l'une des revendications précédentes,
**caractérisé en ce que**
pour réguler la vitesse du véhicule dans la plage de vitesse de consigne prédéfinie (vmin, vmax), lors de l'actionnement de l'élément de service (BE), la régulation de vitesse (REGv) orientée dans le sens de la consommation est activée seulement si la vitesse actuelle du véhicule (vist) est comprise dans la plage de vitesse de consigne prédéfinie (vmin, vmax).

10. Système de régulation de vitesse selon l'une des revendications précédentes,
**caractérisé par**
au moins deux plages de vitesse de consigne prédéfinie.

11. Système de régulation de vitesse selon la revendication 10,
**caractérisé en ce que**
lors de l'actionnement de l'élément de service (BE), la régulation de vitesse est activée pour réguler la vitesse du véhicule dans la plage de vitesse de consigne dans laquelle se trouve la vitesse actuelle du véhicule (vist).

12. Système de régulation de vitesse selon l'une des revendications 1 à 8,
**caractérisé en ce qu'**
à l'activation de l'élément de service (BE) pour activer la régulation de vitesse dans une plage de vitesse de consigne prédéfinie, on prédéfinit la plage de vitesse de consigne en fonction de la vitesse actuelle (vist*), de manière idéale, de façon que la vitesse actuelle (vist*) soit la limite supérieure (vmax) de la plage de vitesse de consigne et on prédéfinit comme limite inférieure (vmin) de la plage de vitesse de consigne une vitesse plus faible dépendant de la vitesse actuelle (vist*).

13. Système de régulation de vitesse selon la revendication 12,
**caractérisé en ce que**
lors de l'actionnement, par l'élément de service (BE) de la régulation de vitesse orientée dans le sens de la consommation, cette régulation de vitesse est seulement activée si le véhicule est en mode orienté dans le sens de la consommation (ECO) demandé avantageusement par le conducteur à l'aide d'un élément de service correspondant.
